# FASCICULE DE BREVET EUROPEEN

(11) **EP 2 196 367 B1**
(45) Date de publication et mention de la délivrance du brevet: **08.02.2012**
(21) Numéro de dépôt: 09178728.3
(22) Date de dépôt: 10.12.2009
(51) Int. Cl.: B60S 1/48, B60S 1/50, F01P 3/10

(54) **Réservoir de liquide de lavage, en particulier des vitres ou des projecteurs, pour un véhicule automobile**
Waschwasserbehälter, insbesondere für Scheiben oder Scheinwerfer in einem Kraftfahrzeug
Washing liquid tank, in particular for windows or projectors of a vehicle

(30) Priorité: 10.12.2008 FR 0858449
(43) Date de publication de la demande: 16.06.2010
(73) Titulaire: Peugeot Citroën Automobiles SA, 78140 Vélizy-Villacoublay (FR)
(72) Inventeur: Jeuffe, Gérard, 78580 Bazemont (FR); Magnier, Nicolas, 92350 Le Plessis Robinson (FR); Gaudiau, Ghislain, 44150 Ancenis (FR); Merour, Sylvain, 44120 Vertou (FR); Sable, Jérôme, 44470 Thouare-sur-Loire (FR)

(56) Documents cités:
- FR-A- 2 875 763
- FR-A- 2 884 477
- GB-A- 2 271 276
- US-A- 4 090 668

## Description

La présente invention concerne un réservoir de liquide de lavage, en particulier des vitres ou des projecteurs, pour un véhicule automobile.

Elle concerne plus particulièrement un réservoir - ou bocal - de type « bi-fonction », dans lequel la réserve de liquide de lavage proprement dite et la boîte de dégazage du circuit de refroidissement du moteur sont compactées en une seule pièce. Ce type de réservoir permet de chauffer le liquide de lavage des vitres ou des projecteurs en récupérant des calories du liquide de refroidissement.

Un tel type de réservoir est connu par le document FR 07 08068, qui décrit un réservoir pourvu d'une cloison séparant une première chambre, dite « chambre froide », comportant dans sa partie supérieure au moins un orifice de remplissage du liquide, et une deuxième chambre, dite « chambre chaude », comportant dans sa partie inférieure au moins un orifice de pompage. La chambre chaude présente une cloison commune à un corps de réchauffage, tel qu'une chambre de dégazage, de manière à assurer le réchauffage du liquide contenu dans la chambre chaude. La chambre chaude communique avec la chambre froide par au moins un orifice de communication ménagé dans la cloison séparative afin de permettre le remplissage de la chambre chaude à partir de la chambre froide. L'orifice de pompage de la chambre chaude se prolonge en direction de l'intérieur de ladite chambre chaude par une colonne d'évacuation du contenu de la chambre chaude. Cette colonne d'évacuation est alimentée en liquide par l'intermédiaire d'au moins une ouverture, dite « ouverture haute », éloignée de la base de la colonne. De plus, la colonne d'évacuation comporte une ouverture supplémentaire d'alimentation en liquide de la colonne d'évacuation, dite « ouverture basse », qui est située à un niveau inférieur à celui de l'ouverture haute et, de préférence, à la base ou au voisinage de la base de la colonne.

Plus généralement, on notera que des perfectionnements ont été apportés aux réservoirs bi-fonction des systèmes de liquide de lavage des véhicules pour améliorer la rapidité de chauffage du liquide lave-glace tout en ne perturbant pas trop la montée en température du liquide de refroidissement dans la boîte de dégazage, la montée en température rapide du liquide de refroidissement étant nécessaire pour le fonctionnement du moteur.

Ces perfectionnements comportent les aménagements suivants :
- une chambre de chauffage, de volume relativement faible, sensiblement verticale, est en contact avec un côté de la boîte de dégazage chaude et monte rapidement en température, en particulier la zone la plus haute de cette chambre en raison du phénomène de transfert de chaleur par convection,
- une isolation thermique, par exemple une lame d'air, entre la chambre de réserve de liquide de lavage et l'ensemble formé par la boîte de dégazage et la chambre de chauffage, permet de na pas pomper de calories dans la réserve contenant la majeure partie du liquide de lavage.
- un tube de régulation, situé dans la chambre de chauffage, permet d'aspirer en priorité le liquide le plus chaud, et
- des orifices calibrés permettent de mettre en relation les différentes chambres du système de lavage.

Toutefois, les réservoirs connus de l'art antérieur et leurs composants présentent une géométrie relativement « figée », c'est-à-dire identique quelque soit, par exemple, la température du liquide de refroidissement ou la température extérieure. C'est le cas, par exemple, de la hauteur du tube de régulation, qui conditionne la température du liquide de lavage aspiré par la pompe. Il en résulte que les performances du système de liquide de lavage ne sont pas les mêmes au démarrage du véhicule (moteur tiède) et après plusieurs minutes de roulage du véhicule (moteur chaud). FR-A-2884477 montre le préambule de la revendication 1

Le but de la présente invention est de fournir un réservoir de liquide de lavage, en particulier des vitres ou des projecteurs, pour un véhicule automobile, qui présente un fonctionnement optimal et permette notamment le chauffage du liquide de lavage au démarrage du véhicule lorsque le liquide de refroidissement contenu dans la boîte de dégazage n'a pas encore atteint sa température optimale de fonctionnement, en permettant le chauffage rapide d'une petite partie de liquide contenue dans la chambre de chauffage avant d'être pompée.

Un autre but de la présente invention est de fournir un tel réservoir de liquide de lavage, qui permette une rapide augmentation de la température du liquide de lavage après le démarrage du véhicule.

Un autre but de la présente invention est de fournir un tel réservoir de liquide de lavage, qui fonctionne sans occasionner de perturbation dans la montée en température de la boîte de dégazage après le démarrage et pendant le roulage du véhicule.

Enfin, c'est également un but de la présente invention de fournir un tel réservoir de liquide de lavage, qui soit de conception, de fabrication et de fonctionnement simple, qui soit fiable et économique.

Pour parvenir à ces buts, la présente invention a pour objet un réservoir de liquide de lavage, en particulier des vitres ou des projecteurs, d'un véhicule automobile, lequel réservoir comporte un compartiment faisant fonction de boîte de dégazage du circuit de refroidissement du moteur, une chambre de chauffage en contact avec ledit compartiment de boîte de dégazage, un compartiment faisant fonction de réserve de liquide de lavage, isolé du compartiment de boîte de dégazage et de la chambre de chauffage, et ce nouveau réservoir comporte, de plus, un moyen pour accélérer le chauffage d'une partie du liquide de lavage lorsque le liquide de refroidissement contenu dans la boîte de dégazage n'a pas encore atteint sa température optimale de fonctionnement, en permettant ainsi le chauffage rapide d'une petite partie de liquide contenue dans la chambre de chauffage qui est ensuite pompée.

Selon un premier mode de réalisation de l'invention, le moyen pour accélérer le chauffage d'une partie du liquide de lavage lorsque le liquide de refroidissement contenu dans la boîte de dégazage n'a pas encore atteint sa température optimale de fonctionnement peut être avantageusement constitué par un tube de régulation, de longueur variable, placé dans la chambre de chauffage, lequel tube de régulation vient s'allonger et pomper le liquide le plus chaud situé dans la partie supérieure de ladite chambre de chauffage.

De manière préférentielle, le tube de régulation, de longueur variable, est formé d'au moins deux parties : un tube inférieur et un tube supérieur pouvant être déplacé par translation à l'intérieur du tube inférieur, et des flotteurs sont fixés à la partie supérieure du tube supérieur, de façon à obtenir la densité qui permette de faire coulisser le tube supérieur à l'intérieur du tube inférieur lorsque la température du liquide augmente.

En variante, le tube supérieur peut être lui-même composé de plusieurs tronçons de tube faisant chacun fonction de tube supérieur mobile sous l'effet du changement de densité du liquide, de manière à s'adapter à la géométrie du réservoir.

Selon un autre mode de réalisation de l'invention, le moyen pour accélérer le chauffage d'une partie du liquide de lavage lorsque le liquide de refroidissement contenu dans la boîte de dégazage n'a pas encore atteint sa température optimale de fonctionnement est constitué par un moyen de réduction du volume de la chambre de chauffage, de façon à avoir moins de liquide à chauffer.

Ce moyen de réduction du volume de la chambre de chauffage peut être avantageusement constitué par au moins une partie de la chambre de chauffage, qui est fabriquée dans un matériau à mémoire de forme, la géométrie de ladite partie à mémoire de forme variant lorsque la température du liquide dépasse un seuil prédéterminé.

De préférence, la partie en matériau à mémoire de forme est une cloison de la chambre de chauffage, qui est de forme concave lorsque le liquide de refroidissement contenu dans la boîte de dégazage n'a pas encore atteint sa température optimale de fonctionnement et prend une forme convexe lorsque ledit liquide atteint sa température optimale de fonctionnement.

En variante, le moyen de réduction du volume de la chambre de chauffage peut être constitué par une cloison mobile, qui est déplacée par translation sous l'effet de l'augmentation de pression dans la boîte de dégazage lorsque cette dernière monte en température.

Cette cloison mobile peut se déplacer sous l'action d'au moins un piston, par exemple.

Selon une autre variante, le moyen de réduction du volume de la chambre de chauffage peut être constitué par une division de la chambre de chauffage en deux sous-chambres, qui communiquent entre elles par l'intermédiaire d'une cloison intermédiaire comportant un matériau qui isole thermiquement les sous-chambres l'une par rapport à l'autre lorsque le liquide de refroidissement contenu dans la boîte de dégazage n'a pas encore atteint sa température optimale de fonctionnement et qui conduit la chaleur lorsque ledit liquide a atteint sa température optimale de fonctionnement.

A titre d'exemple, ce matériau de la cloison intermédiaire peut être un matériau de type paraffine.

La cloison intermédiaire peut être une cloison double, et le matériau de la cloison intermédiaire peut être un matériau en forme de plaque inséré à l'intérieur de la double cloison.

La présente invention a également pour objet un système de distribution de liquide de lavage, en particulier des vitres ou des projecteurs, d'un véhicule automobile, et ce nouveau système de distribution comporte un réservoir qui compacte le réservoir de liquide de lavage et la boîte de dégazage du circuit de refroidissement du moteur, et ce réservoir bi-fonction est conforme à celui décrit ci-dessus dans ses grandes lignes.

La présente invention a enfin pour objet un véhicule automobile, qui comporte un système de distribution de liquide de lavage, en particulier pour les vitres et les projecteurs, qui est conforme au système de distribution décrit ci-dessus dans ses grandes lignes.

D'autres buts, avantages et caractéristiques de l'invention apparaîtront dans la description qui suit de plusieurs modes de réalisation préférés, non limitatifs de l'objet et de la portée de la présente demande de brevet, accompagnée de dessins dans lesquels :
- la figure 1 est une vue en perspective partiellement coupée d'un réservoir de type bi-fonction, selon l'art antérieur,
- la figure 2 est une vue du réservoir de la figure 1, selon un angle de vue différent,
- la figure 3 est une vue de détail du réservoir des figures 1 et 2 montrant en particulier le tube de régulation pour le pompage du liquide le plus chaud,
- les figures 4A et 4B sont des schémas illustrant une première solution pour accélérer le chauffage du liquide de lavage, selon la présente invention, après le démarrage du moteur (figure 4A) et pendant le roulage du véhicule (figure 4B), respectivement,
- les figures 5A et 5B sont des schémas illustrant un mode de réalisation du tube de régulation du réservoir pour la mise en oeuvre de la solution illustrée par les figures 4A et 4B,
- les figures 6A et 6B sont des schémas illustrant un mode de réalisation de la chambre de chauffage du réservoir pour la mise en oeuvre d'une deuxième solution pour accélérer le chauffage du liquide lave-glace, selon la présente invention, après le démarrage du moteur (figure 6A) et pendant le roulage du véhicule (figure 6B), respectivement,
- les figures 7A et 7B sont des schémas illustrant une variante de réalisation de la solution des figures 6A et 6B, et
- les figures 8A et 8B sont des schémas illustrant une autre variante de réalisation de la solution des figures 6A et 6B.

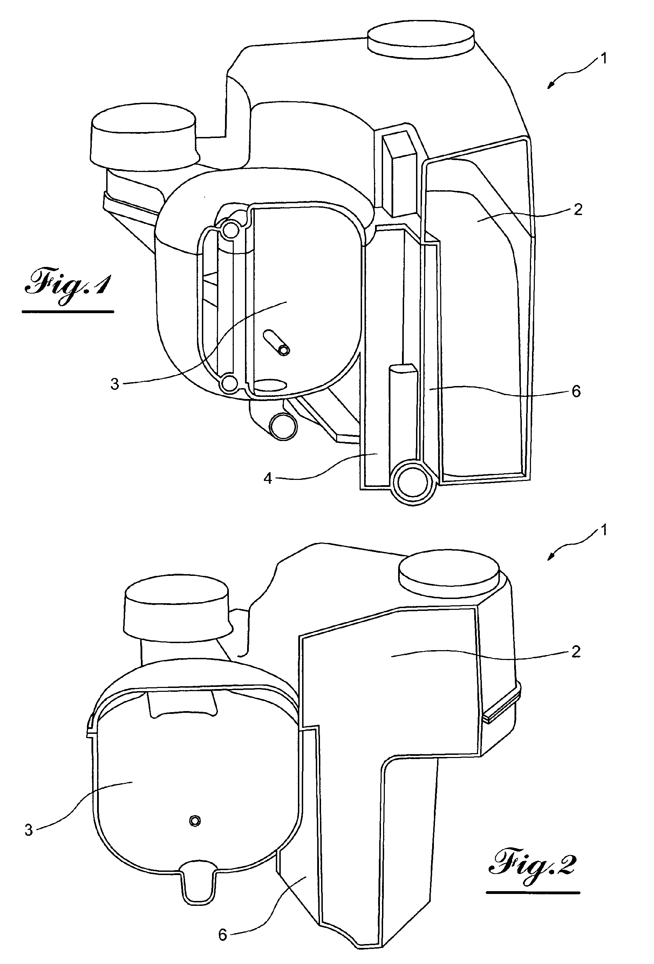

En référence aux figures 1 et 2, on a représenté un réservoir bi-fonction, de référence générale 1, comportant, de manière connue en soi, un ensemble compacté comprenant la chambre de réserve de liquide de lavage 2 et la boîte de dégazage 3 du circuit de refroidissement du moteur.

Une chambre de chauffage 4, de faible volume, qui est en contact avec la boîte de dégazage 3 relativement chaude, monte rapidement en température, en particulier la zone la plus haute de cette chambre 4 du fait d'un échange de chaleur par convection.

La chambre de réserve de liquide de lavage 2, qui contient la majeure partie du liquide de lavage des vitres ou des projecteurs, est thermiquement isolée de la boîte de dégazage 3 et de la chambre de chauffage 4 par une lame d'air 6 afin de na pas pomper de calories.

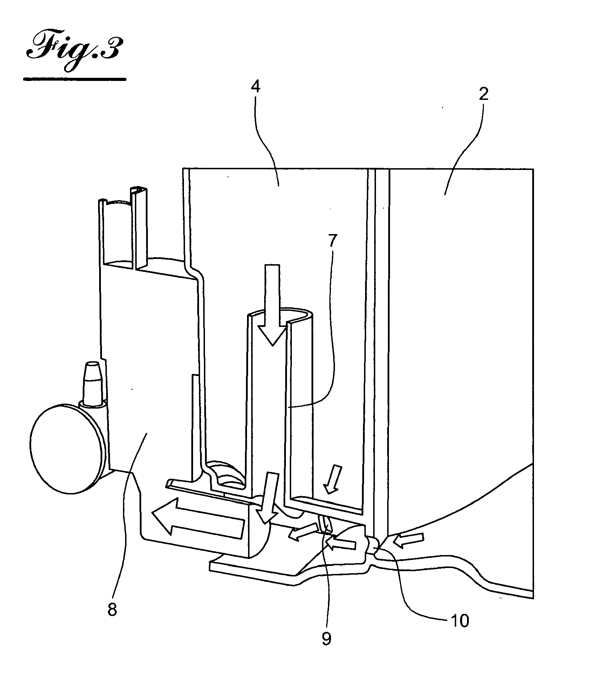

En référence également au dessin de la figure 3, la chambre de chauffage 4 est située sur le côté de la boîte de dégazage 3, la pompe 8 est implantée au point le plus bas possible du volume disponible de cette chambre 4, et un tube de régulation 7 permet d'aspirer en priorité le liquide de lavage le plus chaud.

La hauteur du tube de régulation 7. conditionne la température du liquide de lavage aspiré par la pompe 8, le liquide chaud se trouvant en haut de la chambre de chauffage 4, tandis que le liquide dans la zone basse de la chambre est plus froid.

Des orifices calibrés permettent de mettre en relation les différents compartiments du réservoir ; ainsi, un orifice 9 permet le pompage du liquide chaud lorsque le niveau est faible et un orifice 10 permet le remplissage de la chambre de chauffage 4.

Selon le principe de la présente invention, il est prévu un moyen permettant d'optimiser le fonctionnement du réservoir, notamment le chauffage du liquide de lavage lorsque le liquide de refroidissement contenu dans la boîte de dégazage 3 n'a pas encore atteint sa température optimale de fonctionnement.

Ce moyen de l'invention permet le chauffage rapide d'une petite partie de liquide de lavage qui sera ensuite pompé.

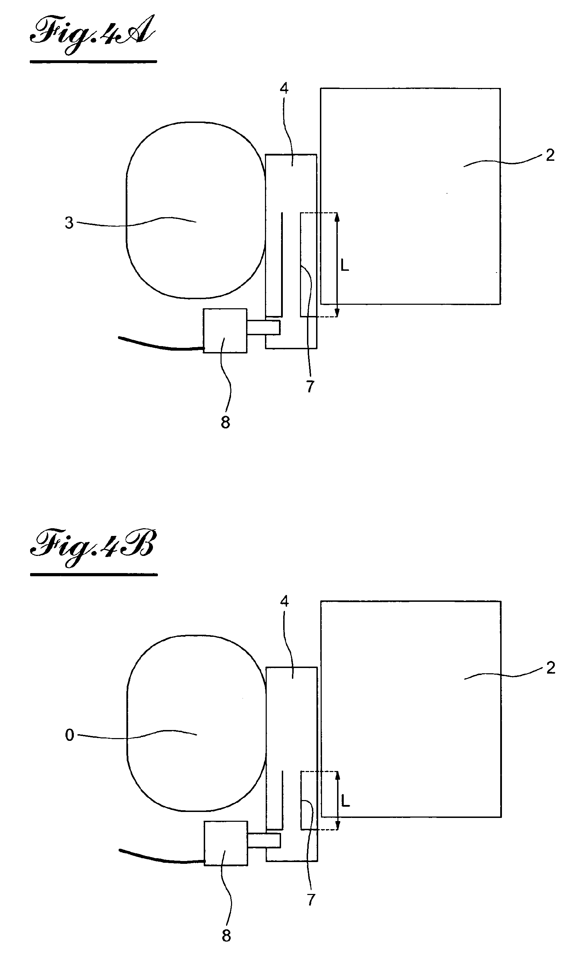

On a représenté, sur les figures 4A et 4B, de manière très schématique, une première solution pour accélérer le chauffage du liquide de lavage, selon le principe de la présente invention.

On notera qu'il existe un gradient de température dans la chambre de chauffage 4, le liquide de lavage étant plus chaud dans la partie haute et étant plus froid dans la partie basse de ladite chambre 4.

Selon le principe de la présente invention, pour accélérer le chauffage du liquide aspiré immédiatement après le démarrage du véhicule, on pompe le liquide le plus chaud de la chambre de chauffage 4, par conséquent le liquide situé dans la partie haute de celle-ci. Une telle action sélective est possible en allongeant le tube de régulation 7 (figure 4A). A l'inverse, lorsque le liquide a eu le temps de chauffer et afin de ne pas pomper un liquide trop chaud susceptible d'entraîner des risques de brûlure, il est nécessaire de diminuer la longueur du tube de régulation 7 (figure 4B). La mise en oeuvre de ce principe de l'invention requiert, par conséquent, la réalisation d'un tube de régulation 7 dont la longueur « L » est variable en fonction de la température du liquide dans la chambre de chauffage 4.

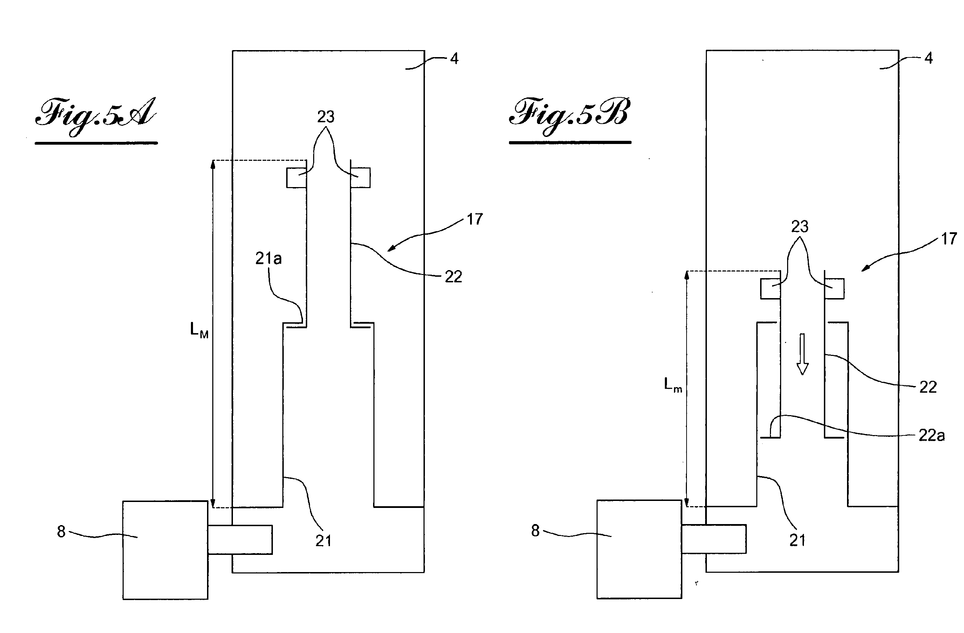

Selon un mode de réalisation illustré sur les figures 5A et 5B, la longueur variable du tube de régulation est obtenue en appliquant un principe de « flottabilité » des corps dans un liquide.

Le tube de régulation 17 des figures 5A et 5B est constitué en deux parties : un tube inférieur 21, fixe, pourvu à sa partie supérieure d'un alésage 21a servant de palier de guidage pour le mouvement de translation d'un tube mobile ou « tube supérieur » 22. Le tube supérieur 22 est prolongé à son extrémité inférieure par une base ou collerette 22a destinée à le retenir dans le tube inférieur 21. Des flotteurs 23 sont aménagés sur le tube supérieur 22, de préférence à son extrémité supérieure ou dans le voisinage de cette dernière.

Le fonctionnement du tube de régulation 17 est le suivait :
La densité du liquide de lavage varie, comme la densité de tout liquide, en fonction de la température : elle diminue lorsque la température augmente et augmente lorsque la température diminue. Lorsque le liquide est relativement froid, le tube supérieur 22 est adapté pour venir flotter en partie haute, comme représenté schématiquement sur la figure 5A. Le tube supérieur 22 est en extension hors du tube inférieur 21 et l'ensemble forme un tube de régulation de longueur maximale L_{M}.

Lorsque la température du liquide augmente, sa densité diminue, et le tube supérieur 22 vient s'enfoncer dans le tube inférieur 21, comme représenté schématiquement sur la figure 5B. La translation du tube supérieur 22 à l'intérieur du tube inférieur 21 a pour résultat que l'ensemble de tube de régulation 17 se raccourcit et peut même atteindre la longueur minimale Lₘ de la figure 5B.

On a réussi, par conséquent, avec le tube de régulation 17 ainsi conçu, à pomper en priorité le liquide le plus chaud de la chambre de chauffage 4 juste après le démarrage du véhicule, et ensuite, lorsque le véhicule roule et le moteur est chaud, à pomper un liquide qui n'est pas le plus chaud de façon à éviter tout risque de brûlure.

Une autre solution pour accélérer le chauffage du liquide après le démarrage du véhicule consiste à réduire le volume de la chambre de chauffage. Cette solution repose sur le principe qu'en diminuant la quantité de liquide à chauffer, le chauffage est plus rapide. Par contre, une fois la température optimale atteinte, il faut augmenter le volume de la chambre de chauffage de manière à disposer d'une plus grande quantité de liquide chaud.

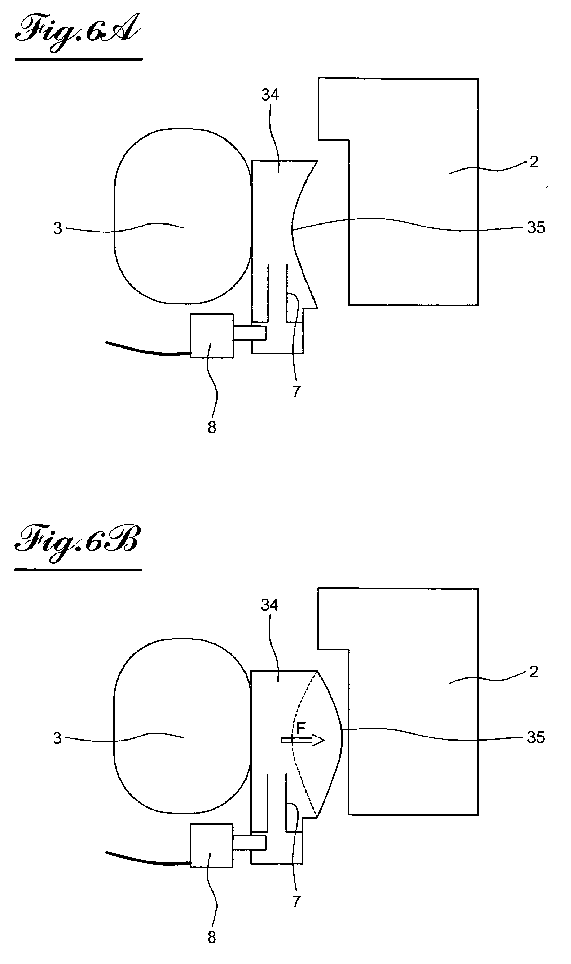

Selon un mode de réalisation illustré sur les figures 6A et 6B, la variation du volume de la chambre de chauffage en fonction de la température de la boîte de dégazage est obtenue en appliquant le principe d'une cloison variable dite « cloison à mémoire de forme ».

Les éléments et composants des figures 6A et 6B qui sont identiques à ceux des figures précédentes portent les mêmes références numériques.

La chambre de chauffage est désignée par la référence 34. Au moins une partie de cette chambre 34 est fabriquée dans un matériau à mémoire de forme et est représentée schématiquement sur les figures 6A et 6B par une cloison référencée 35. Un matériau à mémoire de forme est un matériau qui présente une géométrie donnée dans une certaine plage de températures et une autre géométrie, différente, prédéterminée, lorsque la température dépasse un certain seuil. On a représenté très schématiquement sur la figure 6A la cloison 35 au démarrage du véhicule, le moteur étant tiède et le volume de liquide à chauffer étant relativement faible du fait de la forme concave de la cloison 35. Pendant le roulage du véhicule, le moteur étant maintenant chaud, le volume de la chambre de chauffage 34 s'agrandit du fait de la variation de la forme de la cloison 35 devenue convexe en franchissant une température déterminée.

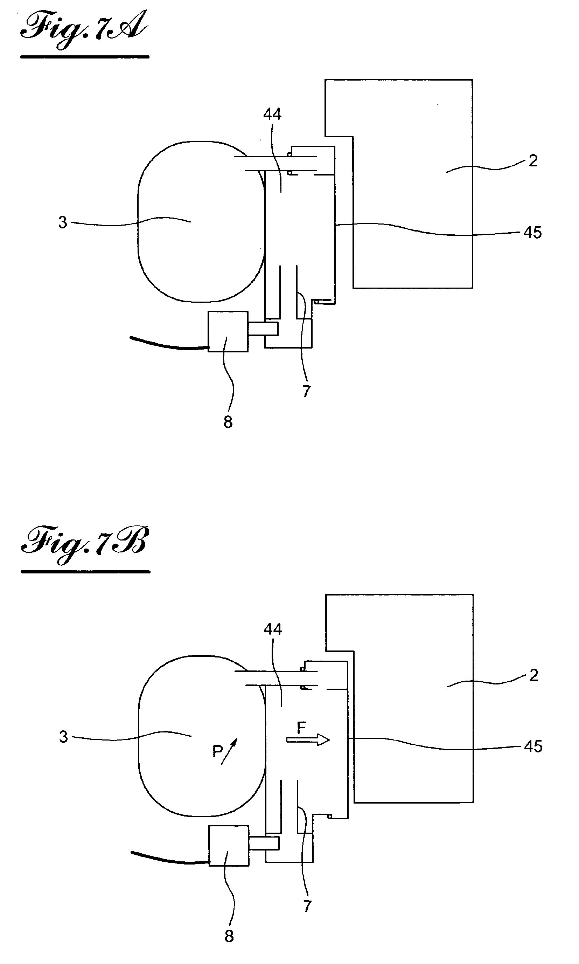

Selon un autre mode de réalisation illustré sur les figures 7A et 7B, la modification de la position de la cloison de la chambre de chauffage en fonction de la température de la boîte de dégazage est obtenue en faisant déplacer par translation la cloison à l'aide d'un ou plusieurs pistons.

Les éléments et composants des figures 7A et 7B qui sont identiques à ceux des figures précédentes portent les mêmes références numériques.

La chambre de chauffage 44 comprend une cloison 45 qui est déplacée par translation selon la flèche F, de façon à agrandir son volume. Cette translation F s'exerce par l'augmentation de la pression P dans la boîte de dégazage 3 due à l'augmentation de la température dans cette dernière. L'augmentation de la pression P provoque le déplacement du (ou des) piston(s) (non représentés) selon le sens de la flèche F de la figure 7B, sur laquelle est schématiquement représentée la chambre de chauffage 44 en extension de volume pendant le roulage du véhicule, le moteur étant alors relativement chaud.

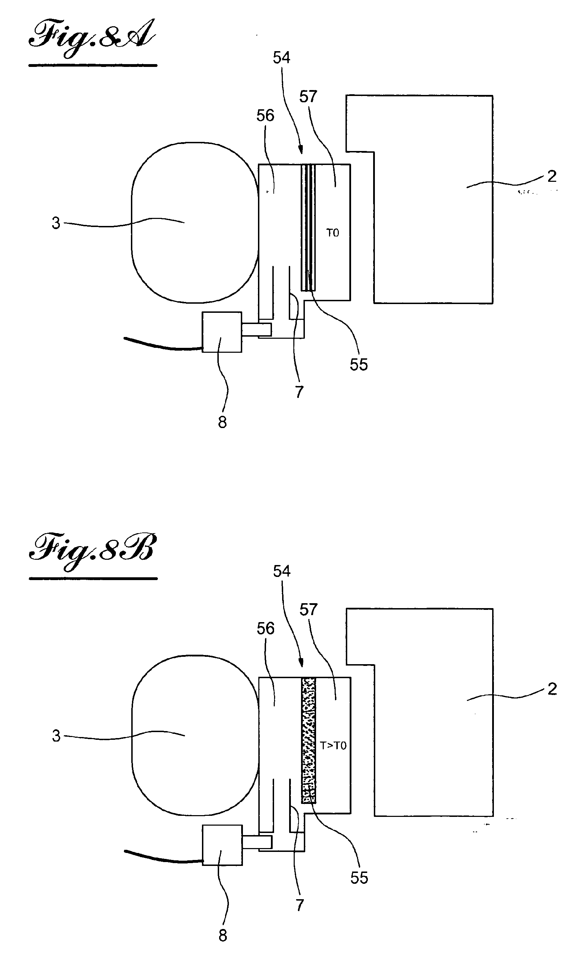

Selon encore un autre mode de réalisation illustré sur les figures 8A et 8B, la variation du volume de la chambre de chauffage en fonction de la température de la boîte de dégazage est obtenue en appliquant le principe d'une division de la chambre de chauffage en deux sous-chambres et en jouant sur la communication entre ces dernières.

Comme pour les modes de réalisation précédents, les éléments et composants des figures 8A et 8B qui sont identiques à ceux des figures précédentes portent les mêmes références numériques.

La chambre de chauffage 54 est divisée en deux sous-chambres 56 et 57, qui communiquent entre elles par l'intermédiaire d'une double cloison 55. A l'intérieur de cette double cloison 55 est inséré une plaque 58 en matériau de type paraffine. Ce matériau de type paraffine présente la propriété d'isoler thermiquement lorsqu'il est froid et de conduire la chaleur lorsqu'il est chaud.

Lorsque la température dans la boîte de dégazage 3 est tiède, juste après le démarrage du véhicule, comme représenté sur le schéma de la figure 8A, le liquide de la sous-chambre 56, proche de la boîte de dégazage 3, va s'échauffer. La paraffine de la cloison intermédiaire 55 n'ayant pas encore atteint sa température de fusion, elle est à l'état solide et, par conséquent, isole la deuxième sous-chambre 57 de la première sous-chambre 56. La sous-chambre 57 reste froide, à une température T0.

Une fois la boîte de dégazage 3 à bonne température, pendant le roulage du véhicule, comme représenté sur le schéma de la figure 8B, le liquide de la sous-chambre 56 va chauffer suffisamment pour entraîner la liquéfaction de la paraffine de la cloison intermédiaire 55. La cloison intermédiaire 55 ayant atteint sa température de fusion, elle va devenir conductrice de la chaleur et, par conséquent, la deuxième sous-chambre 57 va s'échauffer à son tour (T supérieur à T0)

De cette manière, on obtient une variation du volume de liquide à chauffer, ce volume étant plus petit à froid (démarrage du véhicule) et plus grand à chaud (pendant le roulage).

Il importe de noter que, selon d'autres variantes de réalisation de l'invention, le compartiment faisant fonction de réserve de liquide 2 peut être dissocié de l'ensemble constitué par la chambre de chauffage (24 ; 34 ; 44 ou 54 selon les modes de réalisation) et le compartiment de boîte de dégazage 3. Pour des raisons d'encombrement, le compartiment faisant fonction de réserve de liquide 2 pourrait alors se trouver à un autre endroit du compartiment moteur ou dans une autre zone du véhicule.

Les différentes solutions, qui sont décrites ci-dessus à titre d'exemples non limitatifs de l'objet et de la portée de l'invention, présentent de nombreux avantages, parmi lesquels les avantages suivants :
- elles apportent au réservoir bi-fonction un fonctionnement optimal, permettant notamment le chauffage rapide de liquide de lavage au démarrage du véhicule lorsque le liquide de refroidissement contenu dans la boîte de dégazage n'a pas encore atteint sa température optimale de fonctionnement,
- elles permettent un fonctionnement du réservoir qui n'occasionne pas de perturbation dans la montée rapide en température de la boîte de dégazage après le démarrage du véhicule, cette montée étant nécessaire au bon fonctionnement du moteur,
- elles sont de conception, de fabrication et de fonctionnement simple et, de plus, elles sont des solutions fiables et économiques.

Bien entendu, la présente invention n'est pas limitée aux modes de réalisation décrits et représentés ci-dessus à titre d'exemples ; d'autres modes de réalisation peuvent être conçus par l'homme de métier sans sortir du cadre et de la portée de la présente invention.

## Revendications

1. Réservoir de liquide de lavage, en particulier des vitres ou des projecteurs, d'un véhicule automobile, le réservoir comportant un compartiment faisant fonction de boîte de dégazage (3) du circuit de refroidissement du moteur, une chambre de chauffage (24 ; 34 ; 44 ; 54) en contact avec ledit compartiment de boîte de dégazage (3) et un compartiment faisant fonction de réserve de liquide (2) de lavage, isolé du compartiment de boîte de dégazage (3) et de la chambre de chauffage (24 ; 34 ; 44 ; 54), **caractérisé en que** ledit réservoir comporte, de plus, un moyen pour accélérer le chauffage d'une partie du liquide de lavage lorsque le liquide de refroidissement contenu dans la boîte de dégazage (3) n'a pas encore atteint sa température optimale de fonctionnement, en permettant le chauffage rapide d'une petite partie de liquide contenue dans la chambre de chauffage (24 ; 34 ; 44 ; 54) avant d'être pompée.

2. Réservoir selon la revendication 1, **caractérisé en ce que** ledit moyen pour accélérer le chauffage d'une partie du liquide de lavage lorsque le liquide de refroidissement contenu dans la boîte de dégazage (3) n'a pas encore atteint sa température optimale de fonctionnement est constitué par un tube de régulation (17), de longueur variable (« L »), placé dans la chambre de chauffage (24), lequel tube de régulation (17) vient s'allonger et pomper le liquide le plus chaud situé dans la partie supérieure de ladite chambre de chauffage (24).

3. Réservoir selon la revendication 2, **caractérisé en ce que** ledit tube de régulation (17) est formé d'au moins deux parties : un tube inférieur (21) et un tube supérieur (22) pouvant être déplacé par translation à l'intérieur du tube inférieur (21), et **en ce que** des flotteurs (23) sont fixés à la partie supérieure dudit tube supérieur (22), de façon à obtenir la densité qui permette de faire coulisser le tube supérieur (22) à l'intérieur du tube inférieur (21) lorsque la température du liquide augmente, et obtenir ainsi un tube de régulation (17) de plus petite longueur.

4. Réservoir selon la revendication 3, **caractérisé en ce que** ledit tube supérieur (22) est lui-même composé de plusieurs tronçons de tube faisant chacun fonction de tube supérieur mobile sous l'effet du changement de densité du liquide, de manière à s'adapter à la géométrie du réservoir.

5. Réservoir selon la revendication 1, **caractérisé en ce que** ledit moyen pour accélérer le chauffage d'une partie du liquide de lavage lorsque le liquide de refroidissement contenu dans la boîte de dégazage (3) n'a pas encore atteint sa température optimale de fonctionnement est constitué par un moyen de réduction du volume de la chambre de chauffage (34 ; 44 ; 54), de façon à avoir moins de liquide à chauffer.

6. Réservoir selon la revendication 5, **caractérisé en ce que** ledit moyen de réduction du volume de la chambre de chauffage (34) est constitué par au moins une partie de la chambre de chauffage, qui est fabriquée dans un matériau à mémoire de forme, la géométrie de ladite partie à mémoire de forme variant lorsque la température du liquide dépasse un seuil prédéterminé.

7. Réservoir selon la revendication 6, **caractérisé en ce que** ladite partie de la chambre de chauffage (34), qui est fabriquée dans un matériau à mémoire de forme, est une cloison (35) de ladite chambre de chauffage (34), ladite cloison (35) étant de forme concave lorsque le liquide de refroidissement contenu dans la boîte de dégazage (3) n'a pas encore atteint sa température optimale de fonctionnement et prenant une forme convexe lorsque ledit liquide atteint sa température optimale de fonctionnement.

8. Réservoir selon la revendication 5, **caractérisé en ce que** ledit moyen de réduction du volume de la chambre de chauffage (44) est constitué par une cloison mobile (45), qui est déplacée par translation sous l'effet de l'augmentation de pression dans la boîte de dégazage (3) lorsque cette dernière monte en température.

9. Réservoir selon la revendication 8, **caractérisé en ce que** ladite cloison mobile (45) se déplace sous l'action d'au moins un piston.

10. Réservoir selon la revendication 5, **caractérisé en ce que** ledit moyen de réduction du volume de la chambre de chauffage (54) est constitué par le fait que ladite chambre de chauffage (54) est divisée en deux sous-chambres (56, 57) qui communiquent entre elles par l'intermédiaire d'une cloison intermédiaire (55) comportant un matériau qui isole thermiquement les sous-chambres (56, 57) l'une par rapport à l'autre lorsque le liquide de refroidissement contenu dans la boîte de dégazage (3) n'a pas encore atteint sa température optimale de fonctionnement et qui conduit la chaleur lorsque ledit liquide a atteint sa température optimale de fonctionnement.

11. Réservoir selon la revendication 10, **caractérisé en ce que** ledit matériau de la cloison intermédiaire (55) est un matériau de type paraffine.

12. Réservoir selon les revendications 10 et 11, **caractérisé en ce que** ladite cloison intermédiaire (55) est une cloison double et **en ce que** ledit matériau de la cloison intermédiaire (55) est un matériau en forme de plaque inséré à l'intérieur de la double cloison.

13. Système de distribution de liquide de lavage, en particulier des vitres ou des projecteurs, d'un véhicule automobile, **caractérisé en ce que** le réservoir compacte la réserve de liquide de lavage et la boîte de dégazage du circuit de refroidissement du moteur et **en ce que** ledit réservoir est un réservoir conforme à l'une quelconque des revendications 1 à 12.

14. Véhicule automobile, **caractérisé en ce qu'**il comporte un système de distribution de liquide de lavage, en particulier de lavage des vitres ou des projecteurs, conforme au système de distribution de la revendication 13.

## Claims

1. A washing liquid reservoir, in particular for windows or headlamps of a motor vehicle, the reservoir comprising a compartment having the function of a degassing box (3) of the cooling circuit of the engine, a heating chamber (24; 34; 44; 54) in contact with the said degassing box compartment (3) and a compartment having the function of a washing liquid reserve (2), isolated from the degassing box compartment (3) and from the heating chamber (24; 34; 44; 54), **characterized in that** the said reservoir comprises, in addition, a means for accelerating the heating of a portion of the washing liquid when the cooling liquid contained in the degassing box (3) has not yet reached its optimum operating temperature, by permitting the rapid heating of a small portion of liquid contained in the heating chamber (24; 34; 44; 54) before being pumped.

2. The reservoir according to Claim 1, **characterized in that** the said means for accelerating the heating of a portion of the washing liquid when the cooling liquid contained in the degassing box (3) has not yet reached its optimum operating temperature is constituted by a regulation tube (17), of variable length ("L"), placed in the heating chamber (24), which regulation tube (17) comes to lengthen and to pump the warmest liquid situated in the upper part of the said heating chamber (24).

3. The reservoir according to Claim 2, **characterized in that** the said regulation tube (17) is formed by at least two parts : a lower tube (21) and an upper tube (22) being able to be displaced by translation inside the lower tube (21), and **in that** floats (23) are fixed to the upper part of the said upper tube (22), so as to obtain the density which allows the upper tube (22) to be caused to slide inside the lower tube (21) when the temperature of the liquid increases, and to thus obtain a regulation tube (17) of smaller length.

4. The reservoir according to Claim 3, **characterized in that** the said upper tube (22) is itself composed of several sections of tube each having the function of upper tube which is movable under the effect of the change of density of the liquid, so as to adapt to the geometry of the reservoir.

5. The reservoir according to Claim 1, **characterized in that** the said means for accelerating the heating of a portion of the washing liquid when the cooling liquid contained in the degassing box (3) has not yet reached its optimum operating temperature is constituted by a means for reduction of the volume of the heating chamber (34; 44; 54), so as to have less liquid to heat.

6. The reservoir according to Claim 5, **characterized in that** the said means for reduction of the volume of the heating chamber (34) is constituted by at least a portion of the heating chamber, which is manufactured from a shape memory material, the geometry of the said shape memory part varying when the temperature of the liquid exceeds a predetermined threshold.

7. The reservoir according to Claim 6, **characterized in that** the said portion of the heating chamber (34), which is manufactured from a shape memory material, is a partition (35) of the said heating chamber (34), the said partition (35) being of concave shape when the cooling liquid contained in the degassing box (3) has not yet reached its optimum operating temperature, and assuming a convex shape when the said liquid reaches its optimum operating temperature.

8. The reservoir according to Claim 5, **characterized in that** the said means for reduction of the volume of the heating chamber (44) is constituted by a movable partition (45), which is displaced by translation under the effect of the increase in pressure in the degassing box (3) when the latter rises in temperature.

9. The reservoir according to Claim 8, **characterized in that** the said movable partition (45) moves under the action of at least one piston.

10. The reservoir according to Claim 5, **characterized in that** the said means for reduction of the volume of the heating chamber (54) is constituted by the fact that the said heating chamber (54) is divided into two sub-chambers (56, 57) which communicate with each other by means of an intermediate partition (55) comprising a material which thermally insulates the sub-chambers (56, 57) one with respect to the other when the cooling liquid contained in the degassing box (3) has not yet reached its optimum operating temperature and which conducts the heat when the said liquid has reached its optimum operating temperature.

11. The reservoir according to Claim 10, **characterized in that** the said material of the intermediate partition (55) is a material of the paraffin type.

12. The reservoir according to Claims 10 and 11, **characterized in that** the said intermediate partition (55) is a double partition and **in that** the said material of the intermediate partition (55) is a material in the form of a plate inserted into the interior of the double partition.

13. A system for distribution of washing liquid, in particular of windows or headlamps, of a motor vehicle, **characterized in that** the reservoir compacts the reserve of washing liquid and the degassing box of the cooling circuit of the engine and **in that** the said reservoir is a reservoir in accordance with any one of Claims 1 to 12.

14. A motor vehicle, **characterized in that** it comprises a system for distribution of washing liquid, in particular for washing windows or headlamps, in accordance with the distribution system of Claim 13.

## Patentansprüche

1. Behälter für Waschflüssigkeit, insbesondere zum Waschen von Scheiben oder Scheinwerfern eines Kraftfahrzeugs, wobei der Behälter ein Fach aufweist, das als Entgasungsgehäuse (3) des Kühlkreislaufs des Motors dient, eine Heizkammer (23; 34; 44; 54) in Berührung mit dem Fach des Entgasungsgehäuses (3) und ein Fach, das als Waschflüssigkeitsreserve (2) dient, das von dem Fach des Entgasungsgehäuses (3) und von der Heizkammer (24; 34; 44; 54) getrennt ist, **dadurch gekennzeichnet, dass** der Behälter ferner ein Mittel aufweist, um das Heizen eines Teils der Waschflüssigkeit zu beschleunigen, wenn die Kühlflüssigkeit, die in dem Entgasungsgehäuse (3) enthalten ist, ihre optimale Betriebstemperatur noch nicht erreicht hat, indem das schnelle Heizen eines kleinen Teils von Flüssigkeit, der in der Heizkammer (24; 34; 44; 54) enthalten ist, erlaubt wird, bevor sie gepumpt wird.

2. Behälter nach Anspruch 1, **dadurch gekennzeichnet, dass** das Mittel zum Beschleunigen des Heizens eines Teils der Waschflüssigkeit, wenn die Kühlflüssigkeit, die in dem Entgasungsgehäuse (3) enthalten ist, ihre optimale Betriebstemperatur noch nicht erreicht hat, aus einem Regulierrohr (17) mit variabler Länge ("L") besteht, das in der Heizkammer (24) platziert ist, wobei sich das Regulierrohr (17) verlängert und die wärmste Flüssigkeit pumpt, die sich in dem oberen Teil der Heizkammer (24) befindet.

3. Behälter nach Anspruch 2, **dadurch gekennzeichnet, dass** das Regulierrohr (17) aus mindestens zwei Teilen gebildet ist: ein unteres Rohr (21) und ein oberes Rohr (22), die durch Verschieben im Inneren des unteren Rohrs (21) verlagert werden können, und dass Schwimmer (23) an dem oberen Teil des oberen Rohrs (22) derart befestigt sind, dass die Dichte erzielt wird, die es erlaubt, das obere Rohr (22) im Inneren des unteren Rohrs (21) zu schieben, wenn die Temperatur der Flüssigkeit zunimmt, und **dadurch** ein Regulierrohr (17) mit kleinerer Länge zu erzielen.

4. Behälter nach Anspruch 3, **dadurch gekennzeichnet, dass** das obere Rohr (22) selbst aus mehreren Rohrabschnitten besteht, die jeweils als oberes Rohr dienen, das unter der Einwirkung der Änderung der Dichte der Flüssigkeit derart beweglich ist, dass es sich an die Geometrie des Behälters anpasst.

5. Behälter nach Anspruch 1, **dadurch gekennzeichnet, dass** das Mittel zum Beschleunigen des Heizens eines Teils der Waschflüssigkeit, wenn die Kühlflüssigkeit, die in dem Entgasungsgehäuse (3) enthalten ist, noch nicht ihre optimale Betriebstemperatur erreicht hat, aus einem Mittel zum Verringern des Volumens der Heizkammer (34; 44; 54) derart besteht, dass weniger Flüssigkeit zu heizen ist.

6. Behälter nach Anspruch 5, **dadurch gekennzeichnet, dass** das Mittel zum Verringern des Volumens der Heizkammer (34) aus mindestens einem Teil der Heizkammer besteht, der aus einem Material mit Formgedächtnis hergestellt ist, wobei die Geometrie des Teils mit Formgedächtnis variiert, wenn die Temperatur der Flüssigkeit einen vorbestimmten Schwellenwert überschreitet.

7. Behälter nach Anspruch 6, **dadurch gekennzeichnet, dass** der Teil der Heizkammer (34), der aus einem Material mit Formgedächtnis hergestellt ist, eine Wand (35) der Heizkammer (34) ist, wobei die Wand (35) konkave Form hat, wenn die Kühlflüssigkeit, die in dem Entgasungsgehäuse (3) enthalten ist, ihre optimale Betriebstemperatur noch nicht erreicht hat, und die eine konvexe Form annimmt, wenn die Flüssigkeit ihre optimale Betriebstemperatur erreicht hat.

8. Behälter nach Anspruch 5, **dadurch gekennzeichnet, dass** das Mittel zum Verringern des Volumens der Heizkammer (44) aus einer beweglichen Wand (45) besteht, die durch Verschieben unter der Einwirkung der Druckerhöhung in dem Entgasungsgehäuse (3), wenn dessen Temperatur ansteigt, verlagert wird.

9. Behälter nach Anspruch 8, **dadurch gekennzeichnet, dass** sich die bewegliche Wand (45) unter der Einwirkung mindestens eines Kolbens verschiebt.

10. Behälter nach Anspruch 5, **dadurch gekennzeichnet, dass** das Mittel zum Verringern des Volumens der Heizkammer (54) aus der Tatsache besteht, dass die Heizkammer (54) in zwei Unterkammern (56, 57) unterteilt ist, die untereinander über eine Zwischenwand (55) verbunden sind, die ein Material enthält, das die Unterkammern (56, 57) voneinander wärmeisoliert, wenn die Kühlflüssigkeit, die in dem Entgasungsgehäuse (3) enthalten ist, ihre optimale Betriebstemperatur noch nicht erreicht hat, und das die Wärme leitet, wenn die Flüssigkeit ihre optimale Betriebstemperatur erreicht hat.

11. Behälter nach Anspruch 10, **dadurch gekennzeichnet, dass** das Material der Zwischenwand (55) ein Material des Typs Paraffin ist.

12. Behälter nach den Ansprüchen 10 und 11, **dadurch gekennzeichnet, dass** die Zwischenwand (55) eine doppelte Wand ist und dass das Material der Zwischenwand (55) ein Material in Form einer Platte ist, das in das Innere der doppelten Wand eingefügt ist.

13. Waschflüssigkeitsverteilungssystem insbesondere der Scheiben oder Scheinwerfer eines Kraftfahrzeugs, **dadurch gekennzeichnet, dass** der Behälter die Waschflüssigkeitsreserve und das Entgasungsgehäuse des Kühlkreislaufs des Motors kompaktiert und dass der Behälter ein Behälter nach einem der Ansprüche 1 bis 12 ist.

14. Kraftfahrzeug, **dadurch gekennzeichnet, dass** es ein Waschflüssigkeitsverteilungssystem aufweist, insbesondere zum Waschen der Scheiben oder der Scheinwerfer, das dem Verteilungssystem des Anspruchs 13 entspricht.
